# EUROPEAN PATENT SPECIFICATION

(11) **EP 1 000 910 B1**
(45) Date of publication and mention of the grant of the patent: **12.03.2003**
(21) Application number: 99308225.4
(22) Date of filing: 19.10.1999
(51) Int. Cl.: C03C 3/095, C03C 4/02, C03C 4/08

(54) **An ultraviolet/infrared absorbent glass**
Uv und infrarot absorbierendes Glas
Verre absorbant l'ultraviolet/infrarouge

(30) Priority: 09.11.1998 JP 31735598
(43) Date of publication of application: 17.05.2000
(73) Proprietor: Nippon Sheet Glass Co., Ltd., Osaka-shi, Osaka (JP)
(72) Inventor: Seto, Hiromitsu, Nippon Sheet Glass Co., Ltd., Osaka-shi, Osaka (JP); Nakagaki, Shigeki, Nippon Sheet Glass Co., Ltd., Osaka-shi, Osaka (JP); Sakaguchi, Koichi, Nippon Sheet Glass Co., Ltd., Osaka-shi, Osaka (JP)
(74) Representative: Beacham, Annabel Rose

(56) References cited:
- EP-A- 0 561 337
- EP-A- 0 565 882
- WO-A-99/01392
- JP-A- 6 345 482
- JP-A- 6 345 483

## Description

### Field of the invention

The present invention relates to an ultraviolet/infrared absorbent glass having a bronze or gray color shade.

### Background of the invention and related art statement

Recently, a variety of glasses with ultraviolet/infrared absorptivity to be used as a vehicle window glass including a windshield have been proposed with a view of preventing degradation of luxurious interior materials and reducing cooling load of the vehicle.

For example, glasses having a green color shade and being improved in the infrared absorptivity and the ultraviolet absorptivity due to including a relatively large amount of Fe₂O₃ have been developed as a window glass of a vehicle.

A glass having a bronze, brown or gray color shade includes a smaller amount of Fe₂O₃ than that of the glass having a green color shade and employs ultraviolet absorbing agents including CeO₂, TiO₂ and V₂O₅ so as to be provided with the ultraviolet absorptivity. For example, a heat rays absorbent glass having a bronze color shade disclosed in the Japanese Patent H6-40741A consists of a base glass including 68 to 74 wt. % SiO₂, 0.1 to 3.0 wt. % Al₂O₃, 2 to 4.5 wt. % MgO, 8 to 11 wt. % CaO, 11.5 to 16 wt. % Na₂O, 0.5 to 3.0 wt. % K₂O, 0.1 to 0.4 wt. % SO₃, 68 to 74 wt. % total amount of SiO₂ and Al₂O₃, 11 to 15 wt. % total amount of CaO and MgO and 12 to 17 wt. % total amount of Na₂O and K₂O, and colorants including 0.13 to 0.55 wt. % total iron oxide (T-Fe₂O₃) expressed as Fe₂O₃, 0.2 to 0.6 wt. % CeO₂, 0.15 to 0.45 wt. % TiO₂, 0.3 to 14 ppm CoO and 5 to 20 ppm Se, in which the reduction rate of the glass (Fe²⁺/Fe³⁺) is between 17 % and 55 %.

A colored ultraviolet absorbent glass disclosed in the Japanese Patent H6-345482A is a glass having a brown color shade consisting of 65 to 75 wt. % SiO₂, 0.1 to 5 wt. % Al₂O₃, 1 to 6 wt. % MgO, 5 to 15 wt. % CaO, 10 to 18 wt. % Na₂O, 0 to 5 wt. % K₂O, 0.05 to 1.0 wt. % SO₃, 0.2 to 1.5 wt. % CeO₂, 0 to 1.0 wt. % TiO₂, 0 to 0.0015 wt. % CoO, 0.0002 to 0.0012 wt. % Se and 0.2 to 0.4 wt. % Fe₂O₃, in which Fe²⁺ is in a range of 3 to 15 wt. % among the total amount of Fe.

A colored ultraviolet absorbent glass disclosed in the Japanese Patent H6-345483A consists of 65 to 75 wt. % SiO₂, 0.1 to 5 wt. % Al₂O₃, 1 to 6 wt. % MgO, 5 to 15 wt. % CaO, 10 to 18 wt. % Na₂O, 0 to 5 wt. % K₂O, 0.05 to 1.0 wt. % SO₃, 0.4 to 1.0 wt. % CeO₂, 0 to 1.0 wt. % TiO₂, 0.0018 to 0.0030 wt. % CoO, 0.0001 to 0.0010 wt. % Se and 0.1 to 0.3 wt. % Fe₂O₃, in which Fe²⁺ is in a range of 3 to 20 wt. % among the total amount of Fe.

A gray glass composition disclosed in the Japanese Patent H8-48540A consists of 66 to 75 wt. % SiO₂, 0 to 5 wt. % Al₂O₃, 0 to 5 wt. % MgO, 5 to 15 wt. % CaO, 10 to 20 wt. % Na₂O, 0 to 5 wt. % K₂O, 0.0003 to 0.0050 wt. % CoO, 0.0001 to 0.0015 wt. % Se, 0.30 to 0.70 wt. % Fe₂O₃ (total iron), not more than 0.21 wt. % FeO and less than 2.0 wt. % of CeO₂, V₂O₅, TiO₂ and MoO₃ to be provided with a dull gray color shade.

An ultraviolet/infrared absorbent glass disclosed in the Japanese Patent H6-92678A consists of 65 to 80 wt. % SiO₂, 0 to 5 wt. % Al₂O₃, 0 to 5 wt. % B₂O₃, 0 to 10 wt. % MgO, 5 to 15 wt. % CaO, 10 to 18 wt. % Na₂O, 0 to 5 wt. % K₂O, 5 to 15 wt. % total amount of MgO and CaO, 10 to 20 wt. % total amount of Na₂O and K₂O, 0.3 to 2 wt. % cerium oxide expressed as CeO₂, 0 to 1 wt. % TiO₂, 0.1 to 0.8 wt. % T-Fe₂O₃, 0 to 0.006 wt. % CoO, 0 to 0.01 wt. % NiO and 0 to 0.0015 wt. % Se.

The conventional ultraviolet/infrared absorbent glasses as referred above are provided with the ultraviolet absorptivity due to a sole action and/or an interaction of one or more than two from among Fe₂O₃, CeO₂, TiO₂ and the like, and with the heat rays absorptivity due to FeO added in the form of Fe₂O₃ and reduced therefrom. However, it is difficult to provide a bronze or gray color shade developed due to Se and a high ultraviolet and infrared absorptivity for the same glass simultaneously.

For example, the glass having a bronze color shade disclosed in the Japanese Patent H6-40741A requires relatively large contents of Fe₂O₃ and TiO₂ in order to provide the ultraviolet absorptivity because of its relatively small content of CeO₂. In this case, the glass is reduced in the visible light transmittance and the shade is tinged with yellow to become tar tint. It is also difficult to maintain the pink color developed by Se and to provide the bronze or gray color shade in the sights of the present invention for the glass because Se is easy to develop dark brown when the glass includes a large amount of T-Fe₂O₃.

Each of the glasses having a bronze or gray color shade disclosed in the Japanese Patent H6-345482A, H6-345483A and H8-48540A has a disadvantage that indeed the glass has the ultraviolet absorptivity, but is reduced in the infrared absorptivity because the glasses include a small content of FeO in contrast with its large content of T-Fe₂O₃.

Examples 1 through 18 of the ultraviolet/infrared glass disclosed in the Japanese Patent H6-92678 include a small content of T-Fe₂O₃. These examples except for the example 13 are disadvantageously reduced in the infrared absorptivity and increased in the solar energy transmittance (TG). The example 13 is provided with TG of equal to or less than 65 %, while the glass includes 1.46 wt. % CeO₂ in order to be balanced against the visible light transmittance and the ultraviolet transmittance thereof. CeO₂ is not preferable to be used in large amounts because of its expensive cost.

### Object and summary of the invention

It is an object of the present invention to solve conventional problems described above and provide an ultraviolet/infrared absorbent glass having a bronze or gray color shade which is provided with a high ultraviolet and infrared absorptivity.

The ultraviolet/infrared absorbent glass of the present invention consists of a base glass comprising:
65 to 80 wt. % SiO₂;
0 to 5 wt. % B₂O₃;
0 to 5 wt. % Al₂O₃;
0 to 10 wt. % MgO;
5 to 15 wt. % CaO;
10 to 18 wt. % Na₂O;
0 to 5 wt. % K₂O;
5 to 15 wt. % total amount of MgO and CaO; and
10 to 20 wt. % total amount of Na₂O and K₂O,
colorants including:
equal to or more than 0.05 wt. % and less than 0.3 wt. % total iron oxide (T-Fe₂O₃) expressed as Fe₂O₃;
0.63 to 1.4 wt. % CeO₂;
0.02 to 1.5 wt. % TiO₂;
0.0005 to 0.005 wt. % CoO; and
0.0003 to 0.003 wt. % Se,
and an additive including:
0.02 to 0.30 wt. % SO₃.

In the glass of the present invention FeO expressed as Fe₂O₃ is between 30 wt. % and 60 wt. % of T-Fe₂O₃.

The ultraviolet/infrared absorbent glass may further comprise 0.001 to 0.01 wt. % NiO so as to adjust its color of the shade.

The ultraviolet/infrared absorbent glass is preferable to include 0.01 to 1 wt. % La₂O₃.

The ultraviolet/infrared absorbent glass at any thickness between 2.6 mm and 6.3 mm is preferable to be provided with the visible light transmittance of equal to or more than 65 % when measured by using the CIE illuminant A, the solar energy transmittance of equal to or less than 65 % when measured over a wavelength between 300 nm and 2100 nm and the ultraviolet transmittance specified by ISO of equal to or less than 20 %.

The ultraviolet/infrared absorbent glass at any thickness between 2.6 mm and 6.3 mm is preferable to be provided with the excitation purity of equal to or less than 10 % when measured by using the CIE illuminant C and a bronze color shade having the chromaticity expressed as a* and b* defined by the L*a*b* coordinates in ranges of -2≦a*≦1 and 4≦b*≦10.

The ultraviolet/infrared absorbent glass at any thickness between 2.6 mm and 6.3 mm is preferable to be provided with the excitation purity of equal to or less than 5 % when measured by using the CIE illuminant C and a gray color shade having the chromaticity expressed as a* and b* defined by the L*a*b* coordinates in ranges of -2≦a*≦1 and -1≦b*≦4.

### Detailed description of preferred embodiments

The description will be made as regard to the ultraviolet/infrared absorbent glass composition of the present invention. It should be noted that components will be represented with percentage by weight. The composition is based on that of a glass which is suitable for being molded in the floating process.

SiO₂ (silica) is a principal component for forming skeleton of glass. Less than 65 % SiO₂ lowers the durability of the glass and more than 80 % SiO₂ raises the melting temperature of the glass so high.

B₂O₃ is a component for improving the durability of the glass, prompting to melt, and yet enhancing the ultraviolet absorption. B₂O₃ should be less than 5 %, since reduction of the transmittance in the ultraviolet range extends even to the visible range to tinge the glass with yellow and difficulties during forming are caused due to the vaporization of B₂O₃ when B₂O₃ exceeds 5 %.

Al₂O₃ is a component for improving the durability of the glass. More than 5 % Al₂O₃ raises the melting temperature of the glass so high. Al₂O₃ is preferable to be included equal to or less than 5 %, particularly in a range of 0.1 to 2 %.

MgO and CaO improve the durability of the glass and adjust a liquidus temperature and viscosity of the glass during molding. More than 10 % MgO raises the liquidus temperature. Less than 5 % or more than 15 % CaO raises the liquidus temperature of the glass. The durability of the glass is lowered when the total amount of MgO and CaO is less than 5 %, while the liquidus temperature is increased when the total exceeds 15 %.

Na₂O and K₂O prompt the glass to melt. The efficiency of promotion of melting becomes poor when Na₂O is less than 10 % or the total of Na₂O and K₂O is less than 10 %, while the durability of the glass is lowered when Na₂O exceeds 18 % or the total of Na₂O and K₂O exceeds 20 %. K₂O also prompts Se to develop its pink color and improve the ultraviolet absorptivity at the same time. K₂O is preferable not to exceed 5 % because K₂O is expensive as compared to Na₂O.

Iron oxide is present in the form of Fe₂O₃ (Fe³⁺) and the form of FeO (Fe²⁺) in the glass. Fe₂O₃ is a component for improving the ultraviolet absorptivity as are CeO₂ and TiO₂ and FeO is a component for improving the heat rays absorptivity.

When the amount of T-Fe₂O₃ is too small, the glass is reduced in the infrared absorptivity and ultraviolet absorptivity, while, when the content of T-Fe₂O₃ is too large, the glass is reduced in the visible light transmittance and it is difficult to obtain the desired shade because the color development of Se becomes to be tinged with dark brown. Therefore, T-Fe₂O₃ is preferable to be contained in an amount of equal to or more than 0.05 % and less than 0.3 %.

When the amount of FeO is too small, the glass is reduced in the infrared absorptivity, while, when the content of FeO is too large, the glass is reduced in the visible light transmittance. Therefore, a ratio of FeO expressed as Fe₂O₃ to T-Fe₂O₃ is preferable to be in a range of 30 to 60 %.

The present invention aims to improve the infrared absorption of the glass while maintaining the visible light transmittance thereof at a high degree depending on a large content of FeO in contrast with a small content of T-Fe₂O₃. Therefore, the glass of the present invention includes T-Fe₂O₃ and FeO in ranges applying to this aim.

CeO₂ is an essential component of the present invention for improving the ultraviolet absorptivity and is present in the form of Ce³⁺ or in the form of Ce⁴⁺ in the glass. Particularly, Ce³⁺ is effective in absorbing ultraviolet with less absorptivity in the visible range. When CeO₂ is contained too much, the visible rays having a short wavelength are excessively absorbed to tinge the glass with yellow. Since the cerium oxide which is the raw material of CeO₂ is expensive and acts as an oxidizing agent, it is difficult to maintain the ratio of FeO to T-Fe₂O₃ at a high rate when the glass including a large amount of CeO₂. Therefore, the content of CeO₂ is between 0.63 % and 1.4 %.

TiO₂ is a component for improving the ultraviolet absorptivity particularly by interaction with FeO. Too much TiO₂ tinges the glass with yellow. TiO₂ is preferable to be included in a range of 0.02 to 1.5 %.

CoO is a component for forming a bronze or gray color shade by cooperating with Se. Less than 0.0005 % CoO can not form a desired color shade, while more than 0.005 % CoO reduces the visible light transmittance.

Se contributes a pink color, so that it forms the bronze or gray color shade with the aid of a complementary color of CoO. Less than 0.0003 % Se can not form a desired color shade, while more than 0.003 % Se reduces the visible light transmittance.

SO₃ is supplied into the glass from the sulfate or the like which prompts the glass to be refined. In order to make the ratio of PeO to T-Fe₂O₃ fall within the scope of the present invention, the content of the sulfate including sodium sulfate is adjusted in such a manner that the content of SO₃ in the glass falls within a range of 0.02 to 0.30 %. The efficiency of refinement becomes poor when SO₃ is less than 0.02 %, while the bronze or gray color shade can not be obtained because the color development of Se is weakened when SO₃ is more than 0.30 %.

Although NiO brings the bronze or gray color shade, the content of NiO is not more than 0.01 % because the glass is reduced in the visible light transmittance when NiO is contained too much. The efficiency of NiO becomes poor when the content of NiO is less than 0.001 %

La₂O₃ decreases viscosity of the molten glass, prompts the glass to be melted and improves the chemical durability including water-resistance of the glass. When La₂O₃ is added into a glass including Fe₂O₃ and CeO₂, La₂O₃ also reduces the ultraviolet transmittance. The efficiency of La₂O₃ becomes poor when La₂O₃ is less than 0.01 %, while the content of La₂O₃ is preferable to be not more than 1 % because of its expensive cost. Although La₂O₃ may added in the form of a raw material including La₂O₃ at a high rate, such a raw material requires to be refined and increases the cost. In order to save costs of raw materials, La₂O₃ is preferable to be added in the form of a mixture with CeO₂ yielded together with La203. La₂O₃ may be added also in the form of an impurity left in CeO₂ refined at a low degree. In this case, traces of oxidized rare earth elements including Pr₂O₃, Nd₂O₃ and the like may be added into the glass, but the glass may comprise them in such a range as not to lose effects of the present invention.

One or more than two among ZnO, MnO, V₂O₅, MoO₃, SnO may be added within a rang from 0 to 1 % in total or within such a range as not to lose effects of the present invention.

ZnO can prevent from forming the nickel sulfide which is easy to appear during melting the glass in a reducing atmosphere and contributes explosion of the glass itself.

Each of MnO, V₂O₅ and MoO₃ acts as a component for absorbing the ultraviolet and for fine adjustment of the bronze or gray color shade depending on its degree of ultraviolet absorptivity in the glass. While, SnO acts as a reducing agent or a refining agent.

Hereinafter, the present invention will be described referring to examples.

Glass raw material comprising silica sand, dolomite, limestone, soda ash, potassium carbonate, boron oxide, ferric oxide, titanium oxide, cerium oxide, cobalt oxide, metallic selenium, nickel oxide, lanthanum oxide and the carbonaceous reducing agent (graphite etc.) are mixed in such a manner to obtain a desired composition. Then, the raw material is heated and melted in an electric furnace at 1500°C. After 4 hours' melting, the molten glass is flowed onto a stainless plate and annealed to the room temperature to obtain glass plates having a thickness of about 7 mm. Each of the glass plates is polished in order to reduce the thickness thereof to 3.5 mm, 4 mm or 5 mm to become a sample. After that, the sample is measured in the optical properties including the visible light transmittance (YA) measured by using the CIE illuminant A, the solar energy transmittance (TG), the ultraviolet transmittance (Tuv) specified by ISO, L*, a* and b* specified by CIE and measured by using the CIE illuminant C, the dominant wavelength (λd), and the excitation purity (Pe).

Compositions and optical properties of each Example are shown in Table 1. The compositions are represented with percent or ppm by weight and the ratio of FeO expressed as Fe₂O₃ to T-Fe₂O₃ is also represented with weight percent.

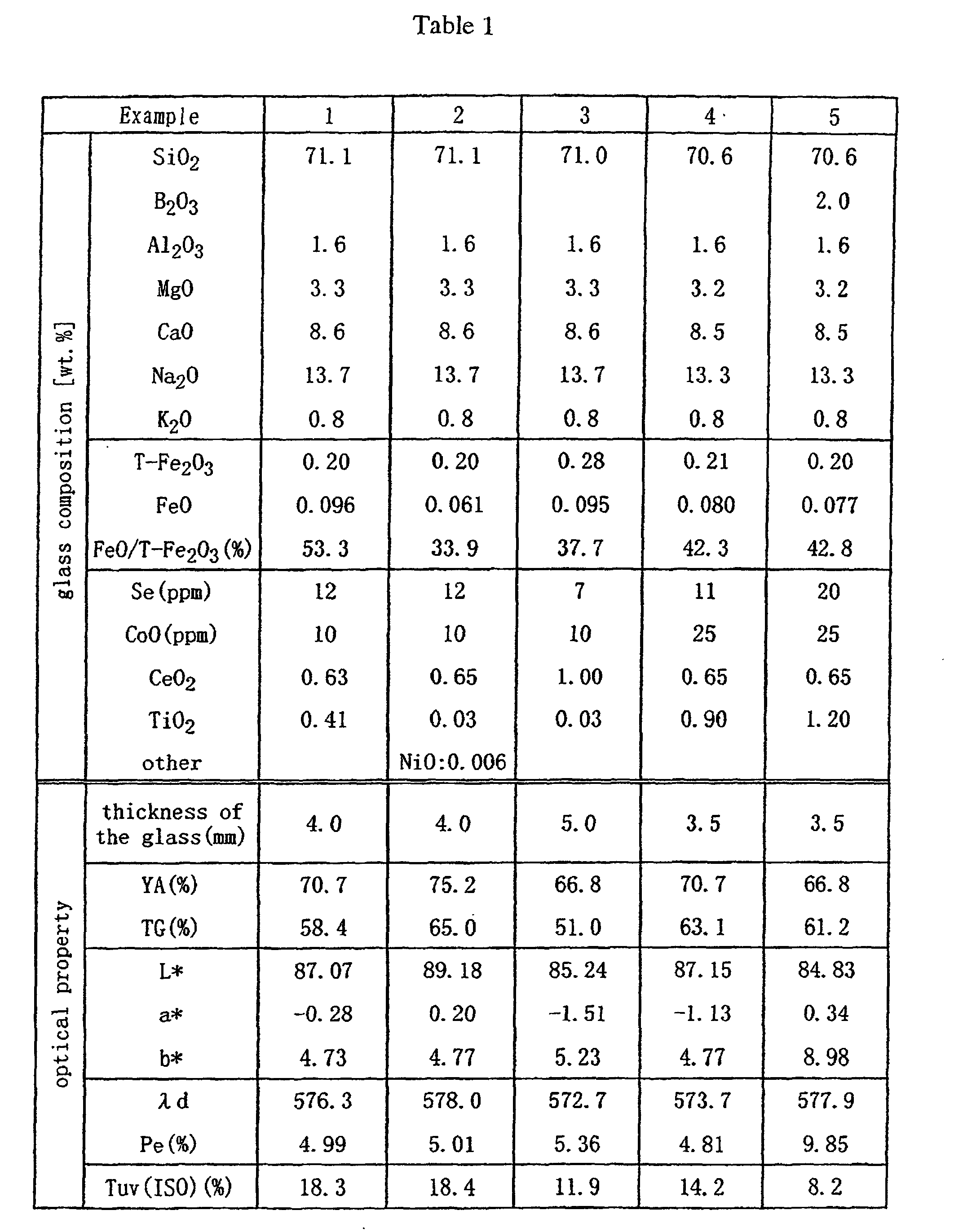

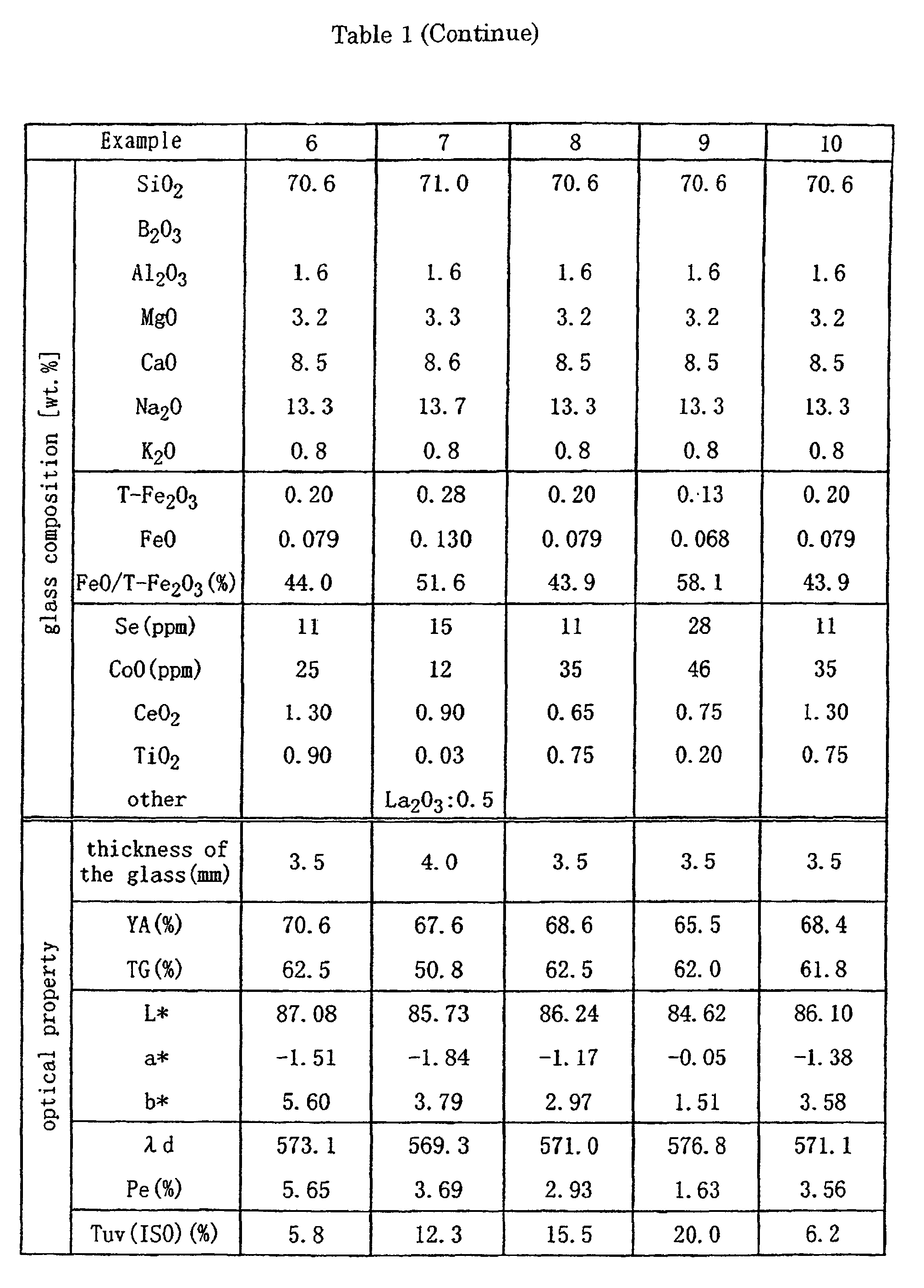

Table 1 shows that Examples 1 through 10 are within the scope of claim 1. Every glass of the Examples consists of:
equal to or more than 0.05 wt. % and less than 0.3 wt. % total iron oxide (T-Fe₂O₃) expressed as Fe₂O₃;
0.63 to 1.4 wt. % CeO₂;
0.02 to 1.5 wt. % TiO₂;
0.0005 to 0.005 wt. % CoO;
0.0003 to 0.003 wt. % Se; and
0.02 to 0.30 wt. % SO₃,
wherein FeO expressed as Fe₂O₃ is between 30 % and 60 % of T-Fe₂O₃.

Every glass of the Examples is also in the scope of claim 2 and has the high visible light transmittance and the superior ultraviolet and infrared absorptivity.

Among the Examples, the glasses of Examples 1 through 6 are provided with the bronze color shade having the excitation purity of 10 % or less when measured by using the CIE illuminant C and the chromaticity expressed as a* and b* by using the CIE color coordinates in ranges of -2≦ a*≦1 and 4≦b*≦10.

The glasses of Examples 7 through 10 are provided with the gray color shade having the excitation purity of 5 % or less when measured by using the CIE illuminant C and the chromaticity expressed as a* and b* by using the CIE color coordinates in ranges of -2≦a*≦1 and -1≦b*≦4.

Example 2 employs NiO as a component for controlling the color of the shade.

Example 5 is reduced in the ultraviolet transmittance and is improved in the durability of the glass due to including 2 wt. % B₂O₃.

Example 7 is reduced in the ultraviolet transmittance and is improved in the durability of the glass due to including La₂O₃.

In Table 2, characteristics of Comparative Examples of the present invention are shown.

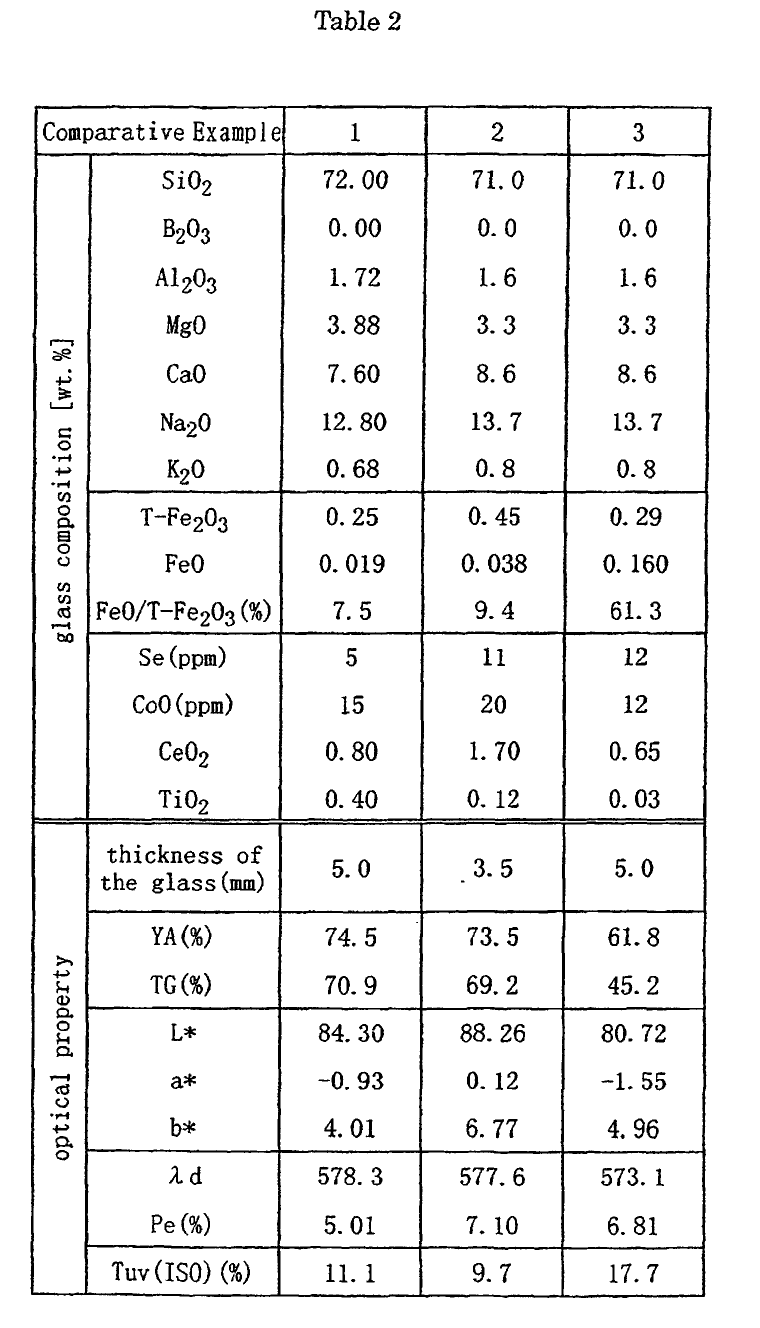

Comparative Example 1 consists of the same composition as the Japanese Patent H6-345482A as referred above. Comparative Example 1 has the low ratio of FeO to T-Fe₂O₃, the value of which is out of the scope of the present invention and the solar energy transmittance of more than 65 %. Comparative Example 2 has T-Fe₂O₃, CeO₂ and the ratio of FeO to T-Fe₂O₃, every value of which is out of the scope of the present invention and also the solar energy transmittance of more than 65 %. Comparative Example 3 has the high ratio of FeO to T-Fe₂O₃, the value of which is out of the scope of the present invention and the visible light transmittance of less than 65 %. Any glasses of the Comparative Examples can not combine the bronze or gray color shade, the high visible light transmittance, the low solar energy transmittance and the low ultraviolet transmittance simultaneously.

Aforementioned Examples and Comparative Examples show that the glass of the present invention is obviously a superior ultraviolet and infrared absorbent glass combining the bronze or gray color shade, the low ultraviolet transmittance and the low solar energy transmittance simultaneously.

As detailed above, according to the present invention, an ultraviolet/infrared absorbent glass combining the bronze or gray color shade, the low ultraviolet transmittance and the low solar energy transmittance can be provided due to color development of Se and CoO in parallel and also due to containing T-Fe₂O₃ in the content of more than 0.05 wt. % and less than 0.3 wt. % and FeO of 30 to 60 wt. % of T-Fe₂O₃ so as to improve the infrared absorptivity while maintaining the visible light transmittance at a high rate, CeO₂ of 0.63 to 1.4 wt. % to perform the melting process in a reducing atmosphere, TiO₂ of 0.02 to 1.5 wt. % to compensate for the ultraviolet absorptivity.

The ultraviolet/infrared absorbent glass of the present invention is excellent in preventing degradation and discoloration of interior materials when the glass is used for a window glass of a vehicle, a building or the like.

## Claims

1. An ultraviolet/infrared absorbent glass consisting of base glass comprising:
65 to 80 wt. % SiO₂;
0 to 5 wt. % B₂O₃;
0 to 5 wt. % Al₂O₃;
0 to 10 wt. % MgO;
5 to 15 wt. % CaO;
10 to 18 wt. % Na₂O;
0 to 5 wt. % K₂O;
5 to 15 wt. % total amount of MgO and CaO; and
10 to 20 wt. % total amount of Na₂O and K₂O,
colorants comprising:
equal to or more than 0.05 wt. % and less than 0.3 wt. % total iron oxide (T-Fe₂O₃) expressed as Fe₂O₃;
0.63 to 1.4 wt. % CeO₂;
0.02 to 1.5 wt. % TiO₂;
0.0005 to 0.005 wt. % CoO; and
0.0003 to 0.003 wt. % Se,
and an additive including:
0.02 to 0.30 wt. % SO₃,
FeO expressed as Fe₂O₃ being between 30 wt. % and 60 wt. % of T-Fe₂O₃.

2. An ultraviolet/infrared absorbent glass as claimed in claim 1, wherein the glass at any thickness in a range of 2.6 to 6.3 mm has the visible light transmittance of equal to or more than 65 % when measured by using the CIE illuminant A, the solar energy transmittance of equal to or less than 65 %, and the ultraviolet transmittance specified by ISO of equal to or less than 20%.

3. An ultraviolet/infrared absorbent glass as claimed in claim 1 or 2, wherein the glass at any thickness in a range of 2.6 to 6.3 mm has a bronze color shade having the excitation purity of equal to or less than 10 % when measured by using the CIE illuminant C, and the chromaticity expressed as a* and b* by using the L*a*b* coordinates in ranges of -2≦a*≦1 and 4≦b*≦ 10.

4. An ultraviolet/infrared absorbent glass as claimed in claim 1 or 2, wherein the glass at any thickness in a range of 2.6 to 6.3 mm has a gray color shade having the excitation purity of equal to or less than 5 % when measured by using the CIE illuminant C, and the chromaticity expressed as a* and b* by using the L*a*b* coordinates in ranges of -2≦a*≦1 and -1≦b*≦4.

5. An ultraviolet/infrared absorbent glass as claimed in any of claims 1 to 4, wherein the glass further comprises NiO in a range of 0.001 to 0.01 wt.%.

6. An ultraviolet/infrared absorbent glass as claimed in any of claims 1 to 5, wherein the glass further comprises La₂O₃ in a range of 0.01 to 1 wt.%.

7. An ultraviolet/infrared absorbent glass as claimed in any of claims 1 to 6, wherein the glass comprises Al₂O₃ in a range of 0.1 to 2 wt.%.

8. An ultraviolet/infrared absorbent glass as claimed in any of claims 1 to 7, wherein the glass further comprises at least one selected from a group consisting of ZnO, MnO, V₂O₅, MoO₃ and SnO in a range of 0 to 1 wt.%.

## Patentansprüche

1. Ultraviolett/Infrarot-absorbierendes Glas aus einem Grund- bzw. Basisglas mit:
65 bis 80 Gewichtsprozent SiO₂,
0 bis 5 Gewichtsprozent B₂O₃,
0 bis 5 Gewichtsprozent Al₂O₃,
0 bis 10 Gewichtsprozent MgO,
5 bis 15 Gewichtsprozent CaO,
10 bis 18 Gewichtsprozent Na₂O,
0 bis 5 Gew. K₂O,
5 bis 15 Gewichtsprozent Gesamtmenge aus MgO und CaO, und
10 bis 20 Gewichtsprozent Gesamtmenge aus Na₂O und K₂O,
Farbstoffen mit:
0,05 Gewichtsprozent oder mehr und weniger als 0,3 Gewichtsprozent Gesamtmenge Eisenoxid (T-Fe₂O₃) ausgedrückt als Fe₂O₃,
0,63 bis 1,4 Gewichtsprozent CeO₂,
0,02 bis 1,5 Gewichtsprozent TiO₂,
0,0005 bis 0,005 Gewichtsprozent CoO, und
0,0003 bis 0,003 Gewichtsprozent Se,
und einem Zusatz mit:
0,02 bis 0,30 Gewichtsprozent SO₃,
wobei FeO, daß als Fe₂O₃ ausgedrückt ist, zwischen 30 Gewichtsprozent und 60 Gewichtsprozent aus T-Fe₂O₃ besteht.

2. Ultraviolett/Infrarot-absorbierendes Glas nach Anspruch 1, bei dem das Glas bei einer Dicke in einem Bereich von 2,6 bis 6,3 mm die sichtbare Lichttransmittanz von 65 % oder mehr hat, wenn diese unter Verwendung der CIE Beleuchtung A gemessen wird, wobei die Solarenergietransmittanz 65 % oder weniger ist, und die Ultravioletttransmittanz durch ISO spezifiziert 20 % oder weniger ist.

3. Ultraviolett/Infrarot-absorbierendes Glas nach Anspruch 1 oder 2, bei dem das Glas bei einer Dicke in einem Bereich von 2,6 bis 6,3 mm einen bronzefarbenen Farbton hat mit der Anregungsreinheit von 10% oder weniger, wenn diese unter Verwendung der CIE Beleuchtung C gemessen wird, und die Chromatizität ausgedrückt als a* und b* unter Verwendung der L*a*b* Koordinaten in Bereichen von -2≤a*≤1 und 4≤b*≤10 ist.

4. Ultraviolett/Infrarot-absorbierendes Glas nach Anspruch 1 oder 2, bei dem das Glas bei einer Dicke in einem Bereich von 2,6 bis 6,3 mm einen Graufarbton hat mit der Anregungsreinheit von 5 % oder weniger, wenn dieser unter Verwendung der CIE Beleuchtung C gemessen wird, und die Chromatizität ausgedrückt als a* und b* durch die Verwendung der L*a*b* Koordinaten in Bereichen von -2≤a*≤1 und -1≤b*≤4 ist.

5. Ultraviolett/Infrarot-absorbierendes Glas nach einem der Ansprüche 1 bis 4, bei dem das Glas weiterhin NiO in einem Bereich von 0,001 bis 0,01 Gewichtsprozent aufweist.

6. Ultraviolett/Infrarot-absorbierendes Glas nach einem der Ansprüche 1 bis 5, bei dem das Glas weiterhin La₂O₃ in einem Bereich von 0,01 bis 1 Gewichtsprozent aufweist.

7. Ultraviolett/Infrarot-absorbierendes Glas nach einem der Ansprüche 1 bis 6, bei dem das Glas Al₂O₃ in einem Bereich von 0,1 bis 2 Gewichtsprozent aufweist.

8. Ultraviolett/Infrarot-absorbierendes Glas nach einem der Ansprüche 1 bis 7, bei dem das Glas weiterhin zumindest eines aus einer Gruppe ausgewählten aufweist, die besteht aus ZnO, MnO, V₂O₅, MoO₃ und SnO in einem Bereich von 0 bis 1 Gewichtsprozent.

## Revendications

1. Verre absorbant les ultraviolets/infrarouges, constitué d'un verre de base comprenant :
65 à 80 % en poids de SiO₂ ;
0 à 5 % en poids de B₂O₃ ;
0 à 5 % en poids de Al₂O₃ ;
0 à 10 % en poids de MgO ;
5 à 15 % en poids de CaO ;
10 à 18 % en poids de Na₂O ;
0 à 5 % en poids de K₂O ;:
5 à 15 % en poids au total de MgO et CaO ; et
10 à 20 % en poids au total de Na₂O et K₂O,
des colorants comprenant :
0,05 % en poids ou plus mais moins de 0,3 % en poids au total d'oxyde de fer (T-Fe₂O₃) exprimé en Fe₂O₃ ;
0,64 à 1,4 % en poids de CeO₂ ;
0,02 à 1,5 % en poids de TiO₂ ;
0,0005 à 0,005 % en poids de CoO ; et
0,0003 à 0,003 % en poids de Se,
et d'un additif comprenant :
0,02 à 0,30 % en poids de SO₃,
le FeO, exprimé en Fe₂O₃, représentant entre 30 % en poids et 60 % en poids de T-Fe₂O₃.

2. Verre absorbant les ultraviolets/infrarouges selon la revendication 1, dans lequel le verre, à une épaisseur quelconque située dans la plage allant de 2,6 à 6,3 mm, a un facteur de transmission de la lumière visible égal ou supérieur à 65 % quand on le mesure en utilisant l'illuminant A CIE, un facteur de transmission de l'énergie solaire égal ou inférieur à 65 %, et un facteur de transmission des ultraviolets, spécifié par la norme ISO, égal ou inférieur à 20 %.

3. Verre absorbant les ultraviolets/infrarouges selon la revendication 1 ou 2, dans lequel le verre, à une épaisseur quelconque située dans la plage allant de 2,6 à 6,3 mm, a une nuance de couleur bronze dont la pureté d'excitation est égale ou inférieure à 10 % quand on la mesure en utilisant l'illuminant C de CIE, et dont la chromaticité, exprimée par a* et b* en utilisant les coordonnées L*a*b*, est située dans les plages -2 ≤ a* ≤ 1 et 4 ≤ b* ≤ 10.

4. Verre absorbant les ultraviolets/infrarouges selon la revendication 1 ou 2, dans lequel le verre, à une épaisseur quelconque située dans la plage allant de 2,6 à 6,3 mm, a une nuance de couleur grise dont la pureté d'excitation est égale ou inférieure à 5 % quand on la mesure en utilisant l'illuminant C de CIE, et dont la chromaticité, exprimée par a* et b* en utilisant les coordonnées L*a*b*, est située dans les plages -2 ≤ a* ≤ 1 et -1 ≤ b* ≤ 4.

5. Verre absorbant les ultraviolets/infrarouges selon l'une quelconque des revendications 1 à 4, dans lequel le verre comprend en outre du NiO dans la plage allant de 0,001 à 0,01 % en poids.

6. Verre absorbant les ultraviolets/infrarouges selon l'une quelconque des revendications 1 à 5, dans lequel le verre comprend en outre du La₂O₃ dans la plage allant de 0,01 à 1 % en poids.

7. Verre absorbant les ultraviolets/infrarouges selon l'une quelconque des revendications 1 à 6, dans lequel le verre comprend du Al₂O₃ dans la plage allant de 0,1 à 2 % en poids.

8. Verre absorbant les ultraviolets/infrarouges selon l'une quelconque des revendications 1 à 7, dans lequel le verre comprend en outre au moins un composé choisi dans le groupe constitué par ZnO, MnO, V₂O₅, MoO₃ et SnO, dans la plage allant de 0 à 1 % en poids.
